Europäisches Patentamt

European Patent Office

Office européen des brevets

(11) Publication number : **0 475 915 A1**

# (12) EUROPEAN PATENT APPLICATION

(21) Application number : **91830366.0**

(22) Date of filing : **05.09.91**

(51) Int. Cl.⁵ : **B60B 7/00**

(30) Priority : **07.09.90 IT 2172290 U**

(43) Date of publication of application :
**18.03.92 Bulletin 92/12**

(84) Designated Contracting States :
**AT BE CH DE DK ES FR GB GR IT LI LU NL SE**

(71) Applicant : **FONDMETAL S.p.A.**
**Via Bergamo, 4**
**Palosco (Bergamo) (IT)**

(72) Inventor : **Corioni, Giovanni**
**c/o FONDMETAL S.p.A., Via Bergamo, 4**
**Palosco (Bergamo) (IT)**

(74) Representative : **Pizzoli, Pasquale et al**
**c/o Società Italiana Brevetti Via G. Carducci 8**
**I-20123 Milano (IT)**

(54) **A motor vehicle wheel with interchangeable decorative element.**

(57)   A motor vehicle wheel 10 provided with an interchangeable decorative element 30 to be directly applied to the wheel spokes 20 and whose outer surface can have an independent configuration other than the one of the inner portion which is applied to the spokes 20. Some passages 50 made on the spokes 20 enable the drainage of the water between the decorative element 30 and the wheel ; a portion of the wheel is apted to cover and protect the tyre valve 58.

Fig.1

The object of the present invention is a motor vehicle wheel with an interchangeable decorative element. More particularly, the object of the present invention is a motor vehicle wheel made of light alloy, e.g. aluminium alloy.

It is known that nowadays there is an ever increasing demand for motor vehicle wheels which, besides the necessary and obvious functional characteristics, also have aesthetic features that enhance the ones of the motor vehicle.

With a view to meeting the above demand, there are at present available on the market sectional wheels, consisting generally of two or three pieces that can be assembled together; thanks to these it is possible to make wheels in each of which the visible part has different aesthetic characteristics. However, the known wheels of this kind have the considerable inconvenience that the assembling thereof, namely the application of the locking screws, necessarily requires the use of dynamometric keys, an implement which - as it is known - is available only at a car mechanic's.

In consideration of the above, when either for aesthetic reasons or because of damages - if any - the user has to modify or replace the aesthetic features of his motor vehicle wheels, he is compelled to resort to the car mechanic's services, this resulting obviously in additional costs.

Another inconvenience of the known wheels derives from the fact that the replacement of, the aesthetic part, or the modification thereto, requires that the wheels be taken completely off the car: in this case too the user is bound to resort to a car mechanic's services.

A further inconvenience of the known wheels lies in the fact that, in order to replace the central portion of a sectional wheel - which is generally the aesthetic part thereof - besides acting upon the locking screws of the wheel, it is necessary to take the tyre off the same, this implying the additional costs referred to hereinabove.

In another kind of known wheels there is the provision for the application of the aesthetic part or element by coupling the latter on the wheel rim; this kind of wheel, however, does not have the necessary safety requirement, because of the risk that the aesthetic part or element get off the wheel during the car motion.

Another further inconvenience of the wheels having the aesthetic part or element fixed by coupling consists in the limits within which the shapes of said aesthetic element can be realized. In fact the shape of this element is strictly bound to the arrangement and extension of the areas where it is coupled to the wheel. This results in the patterns being quite trite, not original at all.

Besides the above inconveniences, which are generally present in all the known wheels, apart from the configuration thereof, there are other inconveniences which particularly relate to wheels of the kind of the present invention, namely the light alloy wheels, e.g. of aluminium alloy, whose rim is provided with a plurality of essentially radially arranged spokes.

In the wheels of this kind it is actually almost always requested the grinding of the inner band of the rim, which remains visible once the wheel will have been applied to the car, because said operation makes the overall aspect of the car very attractive from an aesthetic point of view.

There are at present two basic types of light alloy wheel with spokes, namely a first type wherein the spokes, and more particularly their radial portions which branch off from the central portion, are straight, and a second type wherein said radial portions are essentially bent towards that which will be the inner part of the wheel.

The wheels provided with the spokes of the first type have the considerable inconvenience not to allow the above grinding operation of the inner band of the rim, because such an operation, being carried out by turning, would risk to damage the spokes and therefore, in a word, the wheel.

Still with respect to the wheels with straight spokes it would be possible, on the other hand, to grind the band comprised between the outer edge of the rim and the spokes; however, this would bring about two inconveniences, namely that of having a grinded area of irrelevant height, and that of having an underlying area not grinded and anyway visible between one spoke and the other, which would certainly jeopardize the overall aesthetic aspect of the wheel.

With the spoked wheels of the second type, that is with curved spokes, the above inconveniences do not occur, because it is possible both to grind an inner band of sufficiently relevant height, and to carry out such grinding without damaging the spokes.

However, the wheels of this type have the considerable drawback deriving from the fact that the curved spokes give to the visible part of the wheel an essentially convex appearance which is definitely unaesthetic and, in most cases, not accepted by the user.

There has now been conceived, and is the subject of the present invention, a light alloy wheel with spokes for motor vehicles which has an interchangeable decorative portion or element made of aluminuim alloy, allowing to obviate all the inconveniences of the known wheels.

The characteristics as well as the advantages of the wheel according to the present invention will be evident from the following detailed description of a non-limiting embodiment thereof, with reference to the attached drawings wherein:

   – Fig. 1 is a perspective exploded view showing a wheel with a decorative element according to the present invention;

– Fig. 2 is a perspective exploded view of the same wheel as that of Fig. 1, to which is applied a decorative element different from that of Fig. 1 ;

– Fig. 3. is an exploded view of the wheel according to the present invention taken along section III-III of Fig. 1;

– Fig. 4 is a view of the wheel of Fig. 1, still along section III-III of the same Figure, shown with the decorative element applied to the wheel.

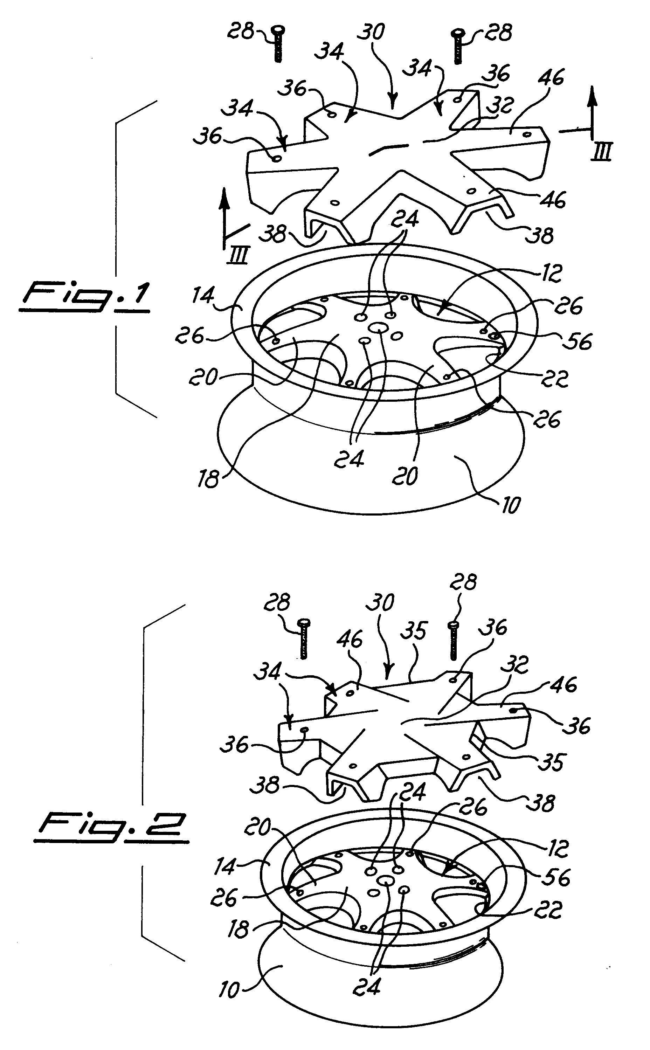

Referring first to Figures 1, 3 and 4, the wheel according to the present invention comprises a grooved rim 10 on which will be applied in a known way the tyre 16, partly shown in Figgs. 3 and 4 only. Rim 10 is provided with a known spoked structure 12 integral with the rim itself and set at a substantially receded position with respect to the outer circumference 14 of the said rim.

The spoked structure 12 essentially consists of a substantially central portion 18 having a mainly plane surface, from which radially extend the real spokes 20 which, as is particularly apparent from Figgs. 3 and 4, are curved towards the inner part of the wheel and, at their ends, are integral or form one piece with a receded portion 22 of rim 10 extending all along the inner profile of the rim.

In the considered embodiment the spokes 20 are six and are set essentially at equidistant angles, but their number could obviously be different.

Five apertures 24 are made on the central portion 18 of the spoked structure 12 for letting pass the threaded rods integral with the hub, as well as the hub itself for applying the lock nuts of the wheel to the motor vehicle.

According to one of the innovative characteristics of the wheel according to the present invention, each spoke 20 is provided with a threaded hole 26 which enables the application of locking screws 28 for securing the decorative element of the wheel, hereinafter described, to the wheel itself.

The decorative element of the wheel according to the present invention, referred to as a whole by 30, has such a shape and configuration as to be coupled with the spoked structure 12 of the wheel and, in the embodiment considered by way of example, it is substantially star-shaped as the said structure 12. In fact, from a substantially central portion 32 there branch off radial shaped portions 34, each provided with a hole 36 for the passage of the locking screws 28 which will be screwed into the threaded holes 26 of the wheel.

The decorative element 30 appears therefore as a body having a substantially concave face, so as to be applied to and firmly coupled with the spokes 12 provided on rim 10. Its overall shape, at any rate, as far as its visible part is concerned, could be that of Fig. 1 or even different, the only binding features being the substantially star-like arrangement of its concave surfaces 38 and the position of the holes 36 which shall coincide with the position of the threaded holes 26 on the wheel spokes 12.

The decorative element 30 of Fig. 1 appears as a substantially star-shaped body also on its visible face but, as said above, such a visible shape could even be different, as for instance that of Fig. 2 wherein the radial portions 34 are no more defined by two walls converging in the centre of element 30, but by two walls initially converging in the centre of element 30 and then linked to one another by a transversal wall 35. In Fig. 2, anyway, like reference numbers denote all the identical elements of Fig. 1, because the decorative element of that figure, even though its visible shape is different from that of Fig. 1, is made according to the same innovative principle.

Further shapes of the visible part of the decorative element 30 coould be provided besides those shown in Figures 1 and 2 by modifying the shape of the walls that link together the cavities 38 of element 30.

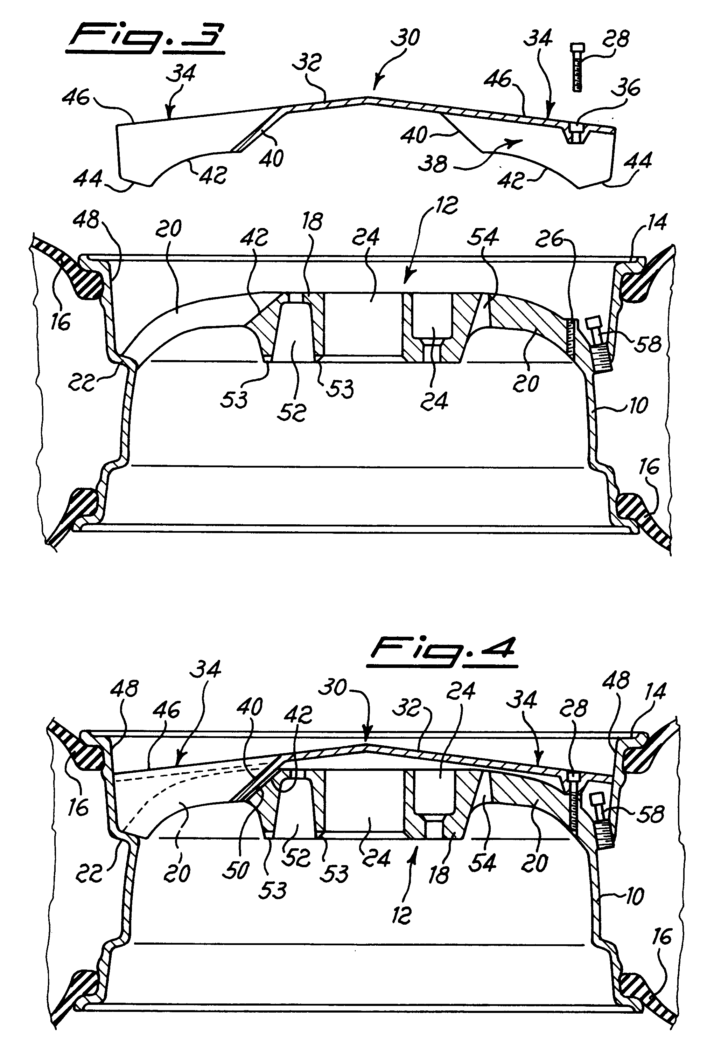

According to another feature of the decorative element 30 of the wheel according to the present invention, the cavities 38 thereof are suitably shaped as hereinafter explained with particular reference to Figures 3 and 4.

From the said figures it can be seen that the lower edge of the side walls of each of said cavities 38 has a first slant portion 40 suitable to be set opposite to a corresponding slant portion 42 of the central portion 18 of the spoked structure 12, a second curvilinear portion 42 substantially equal in shape to the lower edge of spoke 20, and a third slant rectilinear portion 44 suitable to rest against the upper wall of the receded part 22 of rim 10. According to another characteristic of the cavities 38 of the decorative element 30, the upper wall 46 of said cavities 38 has a practically plane surface, and it therefore engages spoke 20 only partly, at the beginning of the radial portion 34, and separates from the said spoke in the direction of rim 10, as results from Fig. 4 in particular. The length of the radial portions 34 is such that the said walls 46, when the element 30 is applied to the wheel, are substantially in contact with the inner band 48 of rim 10 extending between its circumferential edge 14 and the receded part 22.

As already said, the said inner portion or band 48 in the light alloy wheels of this kind is always grinded, so as to have a substantially polished appearance and therefore aesthetically pleasant. Thanks to the decorative element according to the present invention, said inner band 48 will be actually totally in View, because the ends of the radial portions 34 of the decorative element 30 cover it just by a surface which is slightly larger than that of the cross section of spokes 20.

According to a further particularly advantageous aspect of the wheel according to the present invention, the configuration of the decorative element 30 and of the spoked structure 12 is such as to allow apertures to be made for the drainage of the water in case of rain or of car-washing, to avoid the wear and tear of the wheel.

In fact, as can be seen in Fig. 4 in particular, the position of the slant portion 40 is such that, when the decorative element 30 is applied to the wheel, the latter is slightly separated from the opposite wall 42 of the spoked structure 12, defining thus a passage 50.

A further passage 52, having a flare 53 at its inner end part, is directly hollowed out the thickness of the central portion 18 of the spoked structure 12 and, as the wall of the central portion 32 of the decorative element 30 is slightly rounded towards the outside of the wheel, the entry of said passage 52 can let water in and then let it out on the outside of the wheel.

A further passage 54 is hollowed out in the spoke 20, whose upper wall is shaped so as to be slightly separated from the opposite wall 46 of the decorative element 30, at least in the entry area of passage 50 in order to enable, in this case too, the drainage of water on the outside of the wheel.

The number of the above passages can be just any, even though the number of the passages 50 and 54 will be preferably the same as that of the spokes, whilst the number of the passages 52 will be preferably the same as that of the holes 24 for the application of the lock nuts of the wheel.

According to another peculiar feature of the wheel according to the present invention, one of the spokes 20 is provided with a further hole 56, preferably opened on the receded part 22, allowing valve 58 of tyre 16 to pass towards the outside of the wheel. From Fig. 4 it can be seen that, according to an advantageous feature of the wheel according to the invention, said valve 58 is completely covered by the corresponding radial portion 34 of the decorative element 30, shielding it in this way against accidental unwanted bumps or frictions of the wheel.

From what described above there clearly appear evident the advantages of the motor vehicle wheel with decorative element according to the present invention, the main of which are being summarized hereinafter.

The user can directly attend to the replacement of the decorative element or elements, since no special implements are required for this operation.

The replacement of the decorative element or elements does not require to disassemble the tyre or the motor vehicle wheels.

The fixing of the decorative element is particularly stable and therefore there is no risk at all of detachment during the motion of the motor vehicle.

The inner band 48 of rim 10, when element 30 is applied to the wheel, remains almost completely in view, making the depth of the wheel, at least apparently, look higher than it really is, namely the said band will look higher than it actually is.

Moreover, the curved shape of spokes 12 is concealed and the visible profile is the flat profile of element 30.

The central area 32 of the decorative element 30, which conceals the lock nuts of the wheel, also has a beneficial influence on the aesthetic aspect of the wheel, because it makes the wheel look like as if it had a bigger cross section than the real one.

A further considerable advantage consists in the fact the the decorative element 30 can be given a neutral shade, so that it can be subsequently painted the same colour as the car.

The above mentioned advantages deriving from the possibility of draining water on the outside of the wheel and of protecting the valve of the wheel tyre, should not be overlooked either.

## Claims

1. Motor vehicle wheel with interchangeable decorative element, comprising essentially a grooved drim on which the tyre is applied, having a spoked structure integral with said tyre, said structure having at its centre some holes for the passage of the threaded rods of the motor vehicle hub and of the hub itself, the spokes being curved towards the inside of the wheel, characterized in that said decorative element (30) has its face intended to engage the spokes (12) concave and so shaped as to essentially conform with the shape of said spokes, whilst its face intended to remain in view has a shape independent from that of the spokes (12).

2. Motor vehicle wheel according to claim 1, characterized in that said decorative element (30) has, on its face intended to engage the spokes (12), cavities (38) corresponding to these.

3. Motor vehicle wheel according to claim 2, characterized in that the upper wall (46) of each of said cavities (38) intended to remain in view when the decorative element (30) is applied to the wheel, has an essentially plane surface.

4. Motor vehicle wheel according to claim 2, characterized in that the end of each of said cavities (38) near the central portion (32) of the decorative element (30) has at least one substantially plane wall (40) opposite a corresponding wall (42) of the central portion (32) of the decorative element (30), both said walls (40, 42) being slightly separated from each other and defining a passage (50) for the drainage of the water that may have gathered between said decorative element (30) and the wheel.

5. Motor vehicle wheel according to claim 2, characterized in that said cavities (38) of the radial portions (34) of the decorative element (30) have a cross section substantially corresponding to that of the spokes (20), so that almost all the surface of the inner band (48) of the rim (10) remains in view.

6. Motor vehicle wheel according to claim 5, characterized in that the upper wall of each of said cavities (38) has such a length that its end part is substantially in contact with the inner band (48) of the rim (10).

7. Motor vehicle wheel according to claim 1, characterized in that the central portion (18) of the spoked structure (12) has passages (52, 54) for the drainage of water that may have gathered between the wheel and said decorative element (30), the central portion (32) of the latter, at the entry of said passages (52, 54) being slightly separated from said ends.

8. Motor vehicle wheel according to claim 7, characterized in that the edge of the outlet of the passages (52) has a flare (53).

9. Motor vehicle wheel according to claim 1, characterized in that the valve (58) of the wheel tyre (16) crosses one of the spokes (20) in correspondence of its end set at the side of the rim (10), said valve being therefore covered by the end of the upper wall (46) of the corresponding radial portion (34) of the decorative element (30).

10. Motor vehicle wheel according to claim 1, characterized by the fact that the decorative element (30) has, on each of its radial portions (34), a hole (36) suitable to enable the application of a locking screw (28) that is screwed up into a corresponding threaded hole (26) of the spoke (20).

11. Motor vehicle wheel according to claim 1, characterized in that the substantially central portion (32) of the decorative element (30) has a flat surface.

Fig.1

Fig.2

Fig.3

Fig.4

| European Patent Office | EUROPEAN SEARCH REPORT | Application Number EP 91 83 0366 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-2 043 874 (ZERK)<br>* page 1, right column, line 54 - page 2, left column, line 64; figures 1-3 * | 1,2,3 | B60B7/00 |
| Y | DE-U-7 620 702 (SCHIRM METALLGUSS)<br>* page 8, line 22 - page 9, line 18; figure 2 * | 1,2,3 | |
| A | US-A-1 985 908 (ZERK)<br>* page 2, left column, line 23 - line 62 *<br>* page 3, left column, line 39 - line 52; figures 2-5 * | 1,2,3 | |
| A | GB-A-791 632 (LYON)<br>* page 3, line 111 - page 4, line 56; figures 4,5 * | 1 | |
| A | US-A-1 510 048 (EVANS)<br>* the whole document * | 1 | |
| | ----- | | TECHNICAL FIELDS SEARCHED (Int. Cl.5)<br><br>B60B |

The present search report has been drawn up for all claims

| Place of search | Date of completion of the search | Examiner |
|---|---|---|
| THE HAGUE | 17 DECEMBER 1991 | AYITER I. |